# EUROPÄISCHE PATENTSCHRIFT

(11) **EP 0 561 294 B1**
(45) Veröffentlichungstag und Bekanntmachung des Hinweises auf die Patenterteilung: **31.05.1995**
(21) Anmeldenummer: 93104028.1
(22) Anmeldetag: 12.03.1993
(51) Int. Cl.: F16K 31/06, F16K 39/02

(54) **Kraftausgeglichenes Ventil**
Balanced valve
Soupape à force équilibrée

(30) Priorität: 13.03.1992 DE 9203413 U
(43) Veröffentlichungstag der Anmeldung: 22.09.1993
(73) Patentinhaber: KUHNKE GmbH, D-23714 Malente (DE)
(72) Erfinder: Beben, Marius, W-2420 Eutin (DE); Hansson, Claus, W-2420 Eutin-Fissau (DE); Melzer, Frank, D-23714 Malente (DE); Raudzus, Uwe, W-2318 Hohenfelde (DE); David, Kai, W-2422 Bosau/Thürk (DE); Graf, Jürgen, W-2313 Raisdorf (DE)
(74) Vertreter: Wilcken, Thomas, Dipl.-Ing.

(56) Entgegenhaltungen:
- EP-A- 0 380 754
- DE-A- 2 903 296
- DE-A- 3 404 189
- NL-C- 109 691
- US-A- 2 826 215

## Beschreibung

Die Erfindung geht aus von einem kraftausgeglichenen Ventil zur Steuerung von Fluiden gemäß dem Oberbegriff des Anspruches 1.

Ein derartiges Ventil ist aus der DE-A-29 03 296 bekannt.

Ein weiteres Ventil ist aus der EP-A-0 380 754 bekannt. Bei diesem Ventil ist einer Ventilkörpereinrichtung eine kraftausgleichende Kompensationsfläche zugeordnet, die über einen Nebenkanal mit dem das Ventil passierenden Druckfluid beaufschlagt wird. Das Ventil weist als Dichtungsmittel einen elastischen, axial wirksamen, flachen Dichtungsring auf, der einerseits mit dem Ventilgehäuseaufbau und andererseits mit dem axial beweglichen Ventilschaft derart in Angriff kommt, daß ein innerer Radialabschnitt des Dichtungsringes an wenigstens einer Anlageschulter des axial beweglichen Ventilschaftes und ein äußerer Radialabschnitt des Dichtungsringes an wenigstens einer Anlageschulter des Gehäuseaufbaues axial dichtend anliegt, wenn das Druckfluid das Ventil passiert. Hierzu weisen die Dichtungsmittel des weiteren außer dem flachen Dichtungsring zwei sich im wesentlichen in einer gemeinsamen Radialebene gegenüberliegende Ringnuten in dem Ventilschaft und in dem Ventilgehäuseaufbau auf, wobei sich der flache Dichtungsring mit Spiel in beide Ringnuten erstreckt. Ein besonderer Vorteil bei diesem Ventil besteht darin, daß für die Betätigung des Ventilschaftes nur eine sehr geringe elektrische Antriebsleistung erforderlich ist.

Als nachteilig hat sich bei diesem Ventil herausgestellt, daß der flache Dichtungsring als sogenanntes quasistatisches Element wirkt, d. h. daß er nur dann eine einwandfreie axiale Bewegung und damit gleichzeitig die angestrebte Dichtungswirkung ausführt, wenn eine schnelle und relativ hohe Druckdifferenz zwischen den beiden Seiten des Dichtungsringes wirksam ist. Steigt der Druck jedoch nur zeitverzögert an, kann es zu Leckagen über diese quasistatische Dichtung kommen, da der Dichtungsring nicht schnell genug umsteuert. Um möglichen, hierauf zurückzuführenden Fehlfunktionen des Ventiles vorzubeugen, muß deshalb ein erheblicher fertigungstechnischer Aufwand bei der Abstimmung der Teilegeometrie getroffen werden.

In der DE-A-29 03 296, DE-A-34 04 189, NL-C-109 691 und US-A-2 826 215 sind Ventile der eingangs angeführten Art beschrieben, bei denen der oder die Dichtungsringe des Ventilschaftes axial eingespannt gehaltert sind, und zwar einerseits an ihrem Außenumfang am Ventilgehäuse oder einem inneren Ventilaufbau und andererseits am Ventilschaft. Trotz der Elastizität des Dichtungsringmaterials ist der Dichtungsring dadurch insgesamt steifer, so daß zur Betätigung des Ventilschaftes eine erhöhte elektrische Antriebsleistung des Elektromagneten des Ventils für den Ventilschaft erforderlich ist. Dies ist für die Miniaturisierung der Ventile beispielsweise in der fluidischen Steuerungstechnik ein erheblicher Nachteil.

Es ist daher Aufgabe der Erfindung, das einleitend angeführte Ventil dahingehend zu verbessern, daß eine sichere Ventilfunktion auch bei zeitverzögert ansteigendem Fluiddruck und bei geringer elektrischer Antriebsleistung für den Ventilschaft mittels einer verbesserten und kostengünstigen Dichtungskonstruktion erreicht wird.

Die Lösung dieser Aufgabe besteht in den Kennzeichenmerkmalen des Patentanspruches 1.

Durch diese Lösung ist eine einwandfreie Funktion des kraftausgeglichenen Ventiles auch dann erreicht, wenn sich der Fluiddruck in dem Ventil zeitverzögert aufbaut, so daß die geforderte Kraftausgeglichenheit des Ventiles nicht durch irgendwelche Leckagen beeinträchtigt oder verhindert wird. Der flache Dichtungsring ist wenigstens in seinen Randbereichen spielfrei und nichtklemmend gelagert, so daß um diese Bereiche keine Leckageströme stattfinden können. Auf Grund der vorgeschlagenen Anordnung des Dichtungsringes in den Ringnuten ist aber auch gesichert, daß der Dichtungsring während der Hubbewegung des Ventilschaftes ohne nachteilige Auswirkungen auf den Ventilschaft nachgeben kann, und zwar auf Grund seiner spielfreien, nichtklemmenden Lagerung in den Ringnuten und auf Grund der Elastizität seines Materiales. Hierdurch ist praktisch keine nachteilig wirkende Reibung des flachen Dichtungsringes im Betätigungsfall des Ventiles gegeben, so daß die Ansteuerkraft des den Ventilschaft betätigenden Elektromagneten und die den Ventilkörper des Ventilschaftes zuhaltende Feder so ausgelegt werden können, daß eine geringe elektrische Leistungsaufnahme des Elektromagneten gewährleistet bleibt. Um die spielfreie und nichtklemmende Lagerung des flachen Dichtungsringes in den Ringnuten des Ventilschaftes und des Gehäuseaufbaues zu erreichen, werden die Ringnuten in ihrer Breite auf das Dickenmaß des flachen Dichtungsringes angepaßt, was fertigungstechnisch relativ einfach zu erreichen ist, so daß der gesamte Dichtungsaufbau mit geringen Herstellungskosten gefertigt werden kann. Durch die erfindungsgemäße Lösung ist der Dichtungsring nur geringen Eigenverformungen im Betätigungsfall des Ventiles ausgesetzt, so daß der Dichtungsring eine relativ lange Lebensdauer hat.

Eine vorzugsweise Ausgestaltung des erfindungsgemäßen Ventiles besteht darin, daß der äußere und der innere Randbereich des Dichtungsringes je als wulstartige Verdickung ausgebildet sind und daß diese Verdickungen ohne axiale Vorspannung in den jeweiligen Ringnuten angeordnet sind. Hierdurch können die Ringnuten im Verhältnis zur Dicke des Dichtungsringes eine verhältnismäßig große Breite aufweisen, so daß bei Leckagevermeidung auf Grund guter Abdichtung trotzdem eine sehr große Bewegungsfreiheit des Dichtungsringes bei axialer Bewegung des Ventilschaftes gewährleistet und eine erleichterte Fertigung der Ringnuten gegeben ist.

In Weiterbildung können hierzu die Übergangsbereiche der beiden Ringnuten an ihrem offenen Ende zurückspringend geformt sein, z. B. mit Radien. In alternativer Ausgestaltung können die Ringnuten, abgesehen von ihrem inneren Bereich, wo eine spielfreie und nichtklemmende Lagerung des Dichtungsringes gesichert sein muß, in Richtung zu ihrem offenen Ende hin sich erweiternd ausgebildet sein. Durch die im Verhältnis relativ große Breite der Ringnuten können diese fertigungstechnisch besonders einfach und kostengünstig hergestellt werden.

Die Erfindung ist nachstehend anhand eines in den anliegenden Zeichnungen dargestellten Ausführungsbeispieles näher erläutert. Es zeigen:
- Figur 1: in vergrößertem Maßstab einen Axialschnitt durch das Ventil,
- Figur 2 und 3: jeweils eine Schnittdarstellung gemäß dem Kreis in Figur 1 in stark vergrößertem Maßstab durch einen Dichtungsring für das Ventil nach Figur 1.

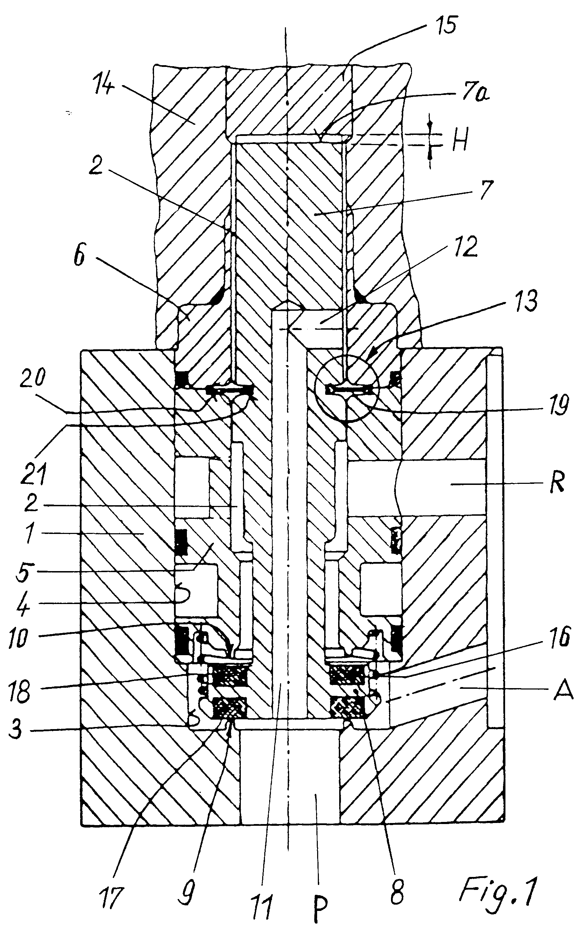

Figur 1 zeigt ein Gehäuse 1 mit den üblichen Fluidanschlüssen P (Fluidzufluß), A (Arbeitsanschluß) und R (Rückfluß bzw. Entlüftung) und mit einer inneren Stufenbohrung 3, 4. In dem Abschnitt 4 der Stufenbohrung befindet sich ein abgedichteter Ventileinsatzaufbau aus einem ersten Bauteil 5 und einem zweiten Bauteil 6. Beide Bauteile weisen eine zentrale, axiale Durchgangsbohrung 2 auf, in welcher sich ein Ventilschaft 7 mit einem Ventilkörper 8 erstreckt. Der Ventilkörper 8 befindet sich in dem Abschnitt 3 der Stufenbohrung und arbeitet mit den sich gegenüberliegenden Ventilsitzen 9 und 10 des Anschlusses P bzw. des ersten Einsatzbauteiles 5 zusammen. Der Ventilschaft besitzt eine zentrale, vom Ventilkörper 8 ausgehende Axialbohrung 11, deren Innenende mit einer kurzen Querbohrung 12 in Verbindung steht, die wiederum aus dem Ventilschaft 7 radial herausführt, und zwar hinter einem Dichtungsaufbau 13, der eine Fluidabdichtung zwischen dem Ventilschaft 7 und dem Gehäuseaufbau 1, 5, 6 bewirkt.

Mit dem Gehäuse 1 ist in bekannter Weise ein Elektromagnet 14 verbunden, dessen Anker 15 im Betätigungsfall den Ventilschaft 7 um den Hub H anhebt, so daß der Ventilkörper 8 seine andere Schließstellung einnimmt und dabei die Anschlüsse P und A miteinander verbindet. Normal wird der Ventilkörper 8 durch eine Zuhaltefeder 16 in seiner ersten Schließstellung gehalten, in welcher der Anschluß P geschlossen ist und die Anschlüsse A und R miteinander kommunizieren, wie Figur 1 zeigt. Der Ventilkörper 8 besitzt in bekannter Weise Dichtungsteile 17 und 18, um eine sichere, abdichtende Anlage des Ventilkörpers an den Ventilsitzen 9 und 10 zu gewährleisten.

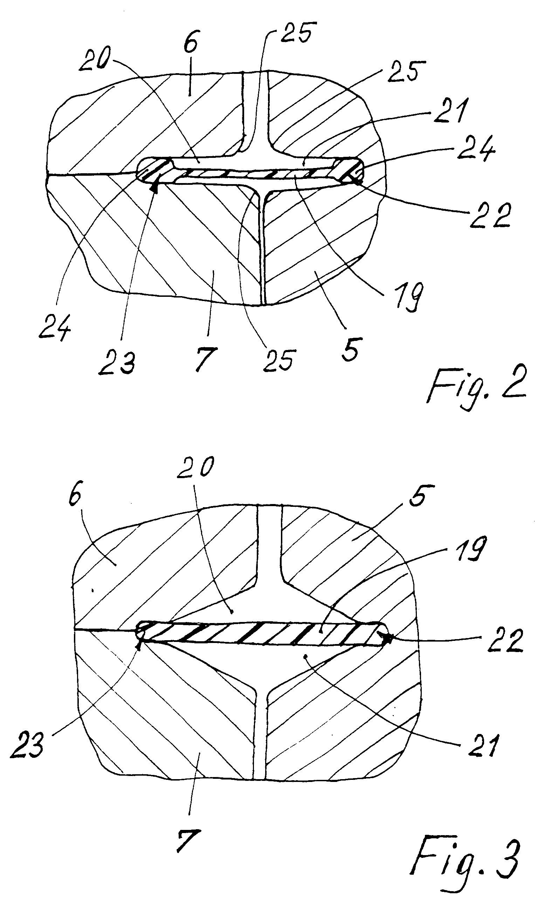

Der Dichtungsaufbau 13 umfaßt einerseits einen flachen Dichtungsring 19 und andererseits zwei sich radial gegenüberliegende Ringnuten 20 und 21, welche jeweils einen Radialabschnitt des Dichtungsringes 19 aufnehmen, wie es aus Figur 2 deutlich zu erkennen ist. Im gezeigten Fall weist der Dichtungsring 19 an seinem äußeren Randbereich 22 und an seinem inneren Randbereich 23 je eine Verdickung 24 auf, die jeweils nichtklemmend in den Nuten 20, 21 sitzen. Man erkennt aus Figur 2, daß der Dichtungsring 19 nur im Bereich seiner Verdickungen 24 spielfrei in den Ringnuten 20 und 21 gehalten ist, so daß die übrigen Radialabschnitte des Dichtungsringes 19 sich mit deutlichem Spiel in den Ringnuten befinden. Dadurch ist eine sehr gute axiale Bewegungsfreiheit für den Dichtungsring gegeben. Um die axiale Bewegungsfreiheit des Dichtungsringes auf jeden Fall zu gewährleisten, können die Übergangsbereiche der beiden Ringnuten 20, 21 an ihrem offenen Ende zurückspringend geformt sein, z. B. in Form von Radien, wie es mit 25 angedeutet ist. Hierbei sind die Radien mit einer hohen Oberflächengüte der betreffenden Bauteile 5, 6, 7 versehen.

In alternativer Ausgestaltung kann der Dichtungsring auch ohne wulstartige Randverdickungen ausgebildet sein. Er hat also in diesem Fall über seine gesamte Breite eine gleichmäßige Dicke. Aber auch in diesem Fall ist der Dichtungsring so in den Ringnuten 20 und 21 gehalten, daß er darin ohne Spiel und nichtklemmend gelagert ist; in diesem Fall kann beispielsweise nach Figur 3 so vorgegangen sein, daß der Dichtungsring 19 nur mit seinen Randbereichen 22 und 23 die Seitenwände berühren, während sich die beiden Ringnuten von dort in Richtung zu ihrem offenen Ende hin etwa trichterförmig erweitern. Auch dieser Dichtungsaufbau ist sehr einfach konstruiert und gewährleistet eine große axiale Bewegungsfreiheit des Dichtungringes bei gleichzeitig sicherer Abdichtungswirkung in seinen Randbereichen.

Vorteilhaft ist die äußere Ringnut 20 anteilmäßig sowohl am ersten Einsatzbauteil 5 als auch am zweiten Einsatzbauteil 6 ausgebildet. Dies ermöglicht eine sehr einfache und kostengünstige Herstellung der Ringnut 20.

Das vorstehend beschriebene Ventil funktioniert folgendermaßen:
Dem an P anstehenden Fluiddruck wirkt die Kraft der Feder 16 sowie gleichzeitig die Druckkraft, die sich über die Bohrungen 11 und 12 auf der rückseitigen Kompensationsfläche 7a des Ventilschaftes 7 aufgebaut hat, entgegen. Durch die Kompensationsfläche und die darauf abgestimmten Flächen an den Ventilsitzen 9 und 10 ist der Ventilschaft 7 in bekannter Weise kraftausgeglichen. Der Ventilkörper 8 wird durch die Schließkraft der Druckfeder 16 in seiner ersten Schließstellung gehalten. Das über die Querbohrung 12 ankommende Druckfluid wird durch den Dichtungsaufbau 13 daran gehindert, mit dem Fluidanschluß R zu kommunizieren.

Um den Ventilkörper 8 in seine andere Schließstellung zu bringen, wird der Elektromagnet 14 betätigt, so daß dessen Anker 15 den Ventilschaft 7 gemäß dem Hub H anzieht. Es braucht nun nur die Kraft der Druckfeder 16 überwunden zu werden, um dem Druckfluid den Weg vom Anschluß P zum Anschluß A freizugeben. Bei diesem Vorgang gibt es vorübergehend eine geringe Druckreduzierung im Druckfluid, die sich jedoch über die Bohrungen 11 und 12 und das Spiel zwischen dem Ventilschaft 7 und dem zweiten Einsatzbauteil 6 auch auf die rückseitige Kompensationsfläche 7a des Schaftes 7 auswirkt, so daß der Kraftausgleich bestehenbleibt. Schließlich ist es möglich, daß die Fluidanschlüsse P und A getauscht werden können, so daß z. B. die alternativen Ventilfunktionen "stromlos geöffnet" oder "stromlos geschlossen" mit demselben Ventil kraftkompensiert realisierbar sind.

## Patentansprüche

1. Kraftausgeglichenes Ventil zur Steuerung von Fluiden, bestehend aus einem Gehäuse (1) mit Strömungskanälen (P, A, R), einem Ventileinsatzaufbau (5, 6), mindestens einem in dem Aufbau axial beweglichen Ventilschaft (7) mit einem Ventilkörper (8), mit einer ersten Ringnut (20) in dem Aufbau (5, 6) und einer der ersten Ringnut gegenüberliegenden zweiten Ringnut (21) in dem Ventilschaft (7) und einem flachen, sich in beide Ringnuten erstreckenden, elastischen Dichtungsring (9), dadurch gekennzeichnet, daß wenigstens der äußere (22) und der innere (23) Randbereich des flachen Dichtungsringes (19) in dem betreffenden inneren Endbereich der beiden Ringnuten (20, 21) spielfrei und nichtklemmend angeordnet sind.

2. Ventil nach Anspruch 1, dadurch gekennzeichnet, daß der äußere (22) und der innere (23) Randbereich des Dichtungsringes (19) je als wulstartige Verdickung (24) ausgebildet sind.

3. Ventil nach wenigstens einem der Ansprüche 1-2, dadurch gekennzeichnet, daß die Übergangsbereiche (25) der beiden Ringnuten (20, 21) an ihrem offenen Ende zurückspringend geformt sind.

4. Ventil nach Anspruch 3, dadurch gekennzeichnet, daß die Übergangsbereiche (25) als Radien mit hoher Oberflächengüte ausgebildet sind.

5. Ventil nach wenigstens einem der Ansprüche 1-4, dadurch gekennzeichnet, daß die beiden Ringnuten (20, 21) in Richtung zu ihrem offenen Ende hin sich erweiternd ausgebildet sind.

6. Ventil nach wenigstens einem der Ansprüche 1-5, wobei der Ventileinsatzaufbau aus zwei axial aneinanderliegenden Bauteilen besteht, dadurch gekennzeichnet, daß jedes Bauteil (5, 6) des Aufbaues einen Anteil der äußeren Ringnut (20) bildet.

## Claims

1. A force-balanced valve to control fluids, consisting of a housing (1) with flow channels (P, A, R), a valve case structure (5,6), at least one valve shaft (7), movable axially in the structure, with a valve body (8), with a first annular groove (20) in the structure (5, 6) and a second annular groove (21), lying opposite the first annular groove, in the valve shaft (7), and with a flat elastic sealing ring (9) extending into both annular grooves, characterised in that at least the outer (22) and the inner (23) marginal region of the flat sealing ring (19) are arranged free of play and in a non-clamping manner in the respective inner end region of the two annular grooves (20,21).

2. A valve according to Claim 1 , characterised in that the outer (22) and the inner (23) marginal region of the sealing ring (19) are each constructed as a bead-like thickening (24).

3. A valve according to at least one of Claims 1-2, characterised in that the transition regions (25) of the two annular grooves (20,21) are shaped so as to recede at their open end.

4. A valve according to Claim 3, characterised in that the transition regions (25) are constructed as radii with a high surface quality.

5. A valve according to at least one of Claims 1-4, characterised in that the two annular grooves (20,21) are constructed so as to widen in the direction of their open end.

6. A valve according to at least one of Claims 1-5, in which the valve case structure consists of two axially adjacent components, characterised in that each component (5,6) of the structure forms a portion of the outer annular groove (20).

## Revendications

1. Soupape à force équilibrée destinée à la commande de fluides, et composée d'un corps (1) comprenant des canaux d'écoulement (P, A, R), un ensemble d'insert de soupape (5, 6), au moins une tige de soupape (7) mobile axialement dans l'ensemble, comprenant un corps d'obturation de soupape (8), une première rainure annulaire (20) dans l'ensemble (5, 6) et une seconde rainure annulaire (21) dans la tige de soupape (7), en regard de la première rainure annulaire, un anneau d'étanchéité (9), élastique et plat, s'étendant dans les deux rainures annulaires, caractérisée en ce qu'au moins la zone de bord extérieure (22) et la zone de bord intérieure (23) de l'anneau d'étanchéité plat (19), sont agencées sans jeu et de manière non coïnçante, dans les zones d'extrémité intérieures respectivement correspondantes des deux rainures annulaires (20, 21).

2. Soupape selon la revendication 1, caractérisée en ce que la zone de bord extérieure (22) et la zone de bord intérieure (23) de l'anneau d'étanchéité (19), sont réalisées chacune en tant qu'épaississement (24) en forme de bourrelet.

3. Soupape selon l'une au moins des revendications 1 et 2, caractérisée en ce que les zones de raccordement (25), à l'extrémité ouverte des deux rainures annulaires (20, 21), présentent une forme en retrait.

4. Soupape selon la revendication 3, caractérisée en ce que les zones de raccordement (25) sont réalisées sous la forme de rayons présentant une qualité élevée d'état de surface.

5. Soupape selon l'une au moins des revendications 1 à 4, caractérisée en ce que les deux rainures annulaires (20, 21) sont réalisées de manière à s'élargir en direction de leur extrémité ouverte.

6. Soupape selon l'une au moins des revendications 1 à 5, l'ensemble d'insert de soupape étant constitué de deux parties constitutives axialement adjacentes, caractérisée en ce que chaque partie constitutive (5, 6) de l'ensemble, forme une portion de la rainure annulaire extérieure (20).
